# EUROPEAN PATENT APPLICATION

(11) **EP 4 681 992 A1**
(43) Date of publication of application: **21.01.2026**
(21) Application number: 25382728.1
(22) Date of filing: 14.07.2025
(51) Int. Cl.: B60R 13/01

(54) **FOLDING DOUBLE FLOOR AND PROCEDURE FOR OBTAINING IT**

(30) Priority: 19.07.2024 ES 202430616
(71) Applicant: Seat, S.A., 08760 Martorell - Barcelona (ES)
(72) Inventor: HERRERA GENE, Joaquim, 08760 Barcelona (ES); FERNÁNDEZ ALBA, Manuel, 08760 Barcelona (ES); COLET GALÍ, Joan, 08760 Barcelona (ES)
(74) Representative: Elzaburu S.L.P.

(57) **Abstract**

This invention refers to a double folding floor (100) for a cargo compartment of a vehicle comprising a first body (110) and a second body (120), with two main surfaces substantially parallel therebetween, and a respective connecting end (113, 123), arranged opposite therebetween, connected by connecting means (101); wherein the first and second bodies (110, 120) comprise a set of teeth (114, 124) configured to couple with a respective set of housings (115, 125) of the adjacent first or second body (110, 120) in the working position, characterized in that the teeth (114, 124) and the housings (115, 125) are distributed in an alternate manner along the hinge line (103) thereby defining a central section (104) that is free of teeth (114, 124) and housings (115, 125), and the method for obtaining it.

## Description

### TECHNICAL FIELD OF THE INVENTION

This invention is within the automotive field. Specifically, it refers to a folding double floor of a vehicle cargo compartment.

### BACKGROUND OF THE INVENTION

Nowadays, it is common to find a double floor within certain cargo compartments of utility vehicles, such as the trunk located at the rear of the motor vehicle. This double floor is advantageous in those types of cargo compartments wherein the vertical depth of the interior of the compartment is greater than the height of the outer frame giving access to the compartment. That is to say, in those compartments wherein there is a considerable difference in height or step between the compartment frame and the base of the compartment. This difference in height or step forces the user to make an extra physical effort when placing the load onto the floor of the compartment or removing it therefrom, an effort that primarily affects the lower back. In those cases wherein such difference in level, or height offset is high and/or the load handled is heavy, bridging such offset may cause discomfort to the user, to the point of injuring them, or in the event that their physical force is limited, there is an impossibility of removing the load from the compartment without the help of a third party.

A double floor is a support surface that may be installed in different positions within a compartment, for example, in a first position resting directly upon the base of the load compartment, and in a second position, at a level higher in relation to the base of the load compartment, consisting of the vehicle chassis and closer to that of the frame thereby raising the surface of the compartment whereupon the largest volume and weight load introduced into said compartment is to be supported. As a consequence, a double floor reduces the existing height offset with the frame and may even eliminate it by being substantially flush with the frame.

The downside of incorporating a double floor is that the original compartment splits in two. The double floor being installed in its raised horizontal position creates a lower compartment which may not be accessible unless the double floor is removed, whose lower surface comprises the base or floor of the compartment structure and its upper surface consists of the lower face of the double floor. The lower compartment created by the double floor generally has a smaller volumetric capacity than the upper and main compartment, it limits the volumetric capacity of the main compartment in terms of its height. In the case of small vehicles, or vehicles with reduced capacity compartments, this poses a problem since the height of the compartment is even less than its width, making it impossible to transport items that could be transported if the double floor were not there.

Double floor load compartments are well-known, which solve the aforementioned problem of insufficient height, allowing a double floor to be installed at different heights. However, in vehicles with a reduced capacity compartment, the entire volumetric capacity of the compartment may easily be required, and a double floor must therefore be ruled out. The state-of-the-art provides solutions in this regard, with double floors that, among other positions, may be rotated against the front wall of the compartment, the one furthest from the frame, and is fixed in such area in a position close to verticality, so that the floor of the compartment structure is exposed. However, there embodiments of load compartments which, due to their geometry, do not allow a double-floor to be rotated to an upright position, either because the depth between the front wall and the compartment frame is greater than its height, or because there are intermediate obstacles that do not allow the double-floor to be rotated to its vertical position.

There are also prior art solutions that aim to solve the problem of rotation and storage in a vertical position of a double floor of unitary construction. The most efficient known solution involves the utilization of double floors which, instead of comprising a single body, comprise several bodies connected and folding therebetween. For this purpose, the connection line is preferably of the hinge type. Preferably, a double-floor usually comprises two bodies, or in the case of comprising more, two of them are the main bodies which substantially cover a surface than that of the base of the load compartment. In these types of folding double floor, the main bodies rotate and fold relative therebetween, moving towards the compartment bottom wall where they are stored in a parking arrangement either vertically or substantially vertically. The smaller size of the two main bodies means that folding said main bodies may be conducted without encountering geometric limitations that prevent maneuvering.

Folding double floor solutions normally limit the rotation of those hinge lines that connect two bodies to one of the two possible directions of rotation, and there are means that prevent rotation in the opposite direction to that stipulated. The first solutions of this type prevent rotation of two hinged bodies in the sense that their upper faces, those that support the load of the main compartment, would be opposite to each other when folded and substantially in contact. By limiting said direction of rotation, it is intended that the means that limit such direction of rotation, normally the thickness of the double-floor itself, will help to prevent a double floor from sagging or sinking towards the lower compartment at the hinge lines in situations wherein said double floor supports heavy loads, and especially when the load is unequally distributed between said bodies. However, the folding of a double floor according to such direction of rotation is rather complex, since it is necessary to raise the hinge line towards the ceiling from its horizontal operating position thereby forming between the two main bodies a "Λ" in which the hinge line is at the upper vertex. Furthermore, this form of folding does not facilitate access to the lower compartment.

However, double floors are known, such as the one disclosed in patent EP3046809 B1, wherein it is possible to fold the rear main body onto the previous main body with the leading main body and the hinge line aligned with the working load support position, because the means that prevent rotation in the opposite direction to that stipulated provide a solution to the sagging or sinking of the main bodies towards the lower compartment at the hinge line, all providing a load-bearing working surface that is continuous, flat and with the same inclination throughout the compartment when the double floor is deployed in its working position. An additional advantage of a double floor with a folding according to this sense is that it allows easy access to the lower compartment mentioned above without the need to completely remove all the existing cargo in the main compartment, and without completely removing or folding the double floor.

This solution consists in providing the ends of those bodies that are part of a hinge line with a toothed configuration. The teeth of each body exceed the hinge line and in the working position are located below the adjacent main body thereby contacting the underside of said adjacent body. To make this arrangement possible, the means that hinge the main bodies are located on the upper face of the connected bodies, the face that serves as a load bearing surface when the double floor is in the working position. The teeth extend from the body, to which they belong, to the adjacent body on the lower face of the body to which they belong, the face constituting the roof of the lower compartment. The thickness of said teeth is less than the thickness of the body to which they belong, and less than the thickness of the adjacent body, so that in the working position, between the upper face of a tooth and the upper face of the body to which they belong, there is a difference in level or step.

As in the working position the upper face of the teeth comes into contact with the lower face of the adjacent body, and in order for the teeth not prevent the double floor from adopting a continuous, flat configuration with the same inclination, the teeth need to be coupled to the adjacent body. This is achieved by means of recesses in the thickness that the bodies have arranged on their lower face in the areas where the adjacent body has a teeth, so that this recess serves as a housing for the tooth of the adjacent body. For the coupling to have contact between the upper surface of the tooth and the lower surface of the housing, the thickness of the adjacent body within the housing area coincides with the height of the step between the upper surface of the tooth and the working surface of the body to which it belongs. For the same reason, within the area of the hinge line wherein there is a tooth in one of the bodies, there is no tooth in the adjacent body since there must be a housing in that place and the tooth alternate in one and the other body along the hinge line.

Accordingly, when a double floor is in its working position, a strip is formed on both sides of each hinge line where there is an overlap of the bodies, and in the strip of each body, there are arranged teeth of the adjacent body which in a horizontal position are coupled together. These teeth, located on the lower face of the double floor, prevent the bodies from folding in the direction in which the hinge line rises from its horizontal position. In the event that the double floor supports a high weight load, or one that is unequally distributed between the bodies, the teeth distribute the weight evenly between the two bodies thereby transmitting part of the static loads supported by each of the bodies to the adjacent body; thus avoiding possible sagging or sinking of the area of the double floor area where the hinge line is located.

Although the technical proposal set out in document EP3046809 B1 solves the technical problems of folding and load distribution, its implementation encounters technical problems that make it inappropriate and amenable to improvement. In these types of foldable double floor, one of the main bodies, the rear one adjacent to the compartment frame, is folded against the previous main body that is adjacent the bottom wall, and the two main bodies already folded together are rotated backwards towards the compartment bottom wall along an axis adjacent to said bottom wall. In some folding double floors, in order to reach the vertical or substantially vertical parking position, the final rotation must also be accompanied by a horizontal displacement of those bodies that are already in a vertical position towards the back wall, where there are retention means to store the folding double floor in the parking position, and a lifting of the double floor for fitting it into said retention means.

The problem arises in the final rotation and subsequent horizontal and vertical displacements of the double floor in a vertical position with the two main bodies folded together. During these last phases, the two working surfaces of the two main bodies are substantially in contact. The difficulty arises from the lack of an appropriate area in which to keep the double floor when the two main bodies are folded. The edge generated by the two main bodies being folded on their hinge line, would be the only natural area where the folded double floor could be securely held to perform the final movements. That is to say that the safe and natural way would be to approach one or both hands closer to the edge of the folded double floor and with the fingers to clamp on the outer edges of the edge or beyond the edge towards the bodies within an area within reach of the fingers with the normal thickness of the double floor, being areas configured to withstand forces that will not suffer from the handling of the folded double floor and having a thickness suitable for handling. But on double floors of this type, neither the edge of the folded element nor the surfaces of the bodies can be reached with the fingers, and the only alternative to reaching is to use the teeth, holding one or two of them.

A tooth is not, however, designed to work as a handhold, but to together with the rest of the teeth and housings, it is designed to distribute the static loads. The thickness of the double floor and of each of its bodies is reduced so that it does not have a high weight and is easy to handle. The thickness of the teeth must be less than the thickness of the double floor, usually half the thickness of the double floor in order to achieve the best coupling: the thickness of the body in the tooth housing area of the adjacent body should be half the thickness of the body, so that there is no one part of the tooth/housing coupling that is weaker than the other. Consequently, the force that must be exerted upon one or two teeth in order to rotate, move, lift and raise the non-hinged ends of the folded bodies is very uncomfortable for the user to apply because it cannot be held or handled in a natural way. Furthermore, during handling, a tooth may fracture, which may injure the user at the time of fracture by generating sharp edges, or also on future occasions when such a sharp edge is exposed unless the entire double floor is replaced. The breakage of a teeth also causes a less efficient distribution of static loads among the rest of the teeth that remain intact.

An additional problem is the use of teeth instead of the edge and robust surfaces of the bodies for their handling up to the vertical parking position. If these parts could be held in place of the teeth, a clamp-type force could be exerted with one hand by applying the thumb to one of the surfaces adjacent and perpendicular to the edge of the element consisting of the two folded bodies, and by applying the remaining fingers to the opposite surface. The clamping effect on the two faces of said element while it is being manipulated generates torque on the hinge line that tends to join the two folded bodies together. However, when the clamping is performed by means of the teeth, this torque which tends to hold the folded bodies together cannot be generated, or the opposite effect may even be caused if a clamp-type clamping is performed on two adjacent teeth, which belong to different bodies. The latter would generate torque that is opposite to the previous torque, tending to separate the two folded bodies while they are being handled, which may cause a folded double floor to destabilize in the user's hand or hands when handling it, and cause it to fall to the ground, which may also cause damage to the user or to the teeth of the double floor.

In order to minimize the above mentioned risk of teeth breakage, but not prevent such a possibility, it is necessary to minimize their extension outside the body to which they belong and consequently reduce the extension of the strip on both sides of the hinge line where the bodies overlap and the distribution of static forces when they are bearing a load in their working position. In other words, an overlapping strip with the minimum width is defined such that the double floor does not sag against weights that are normally carried in the compartment. However, his reduction in the transmission of static forces between the bodies in order to ensure the integrity of the teeth and of the user when handling the folded double floor and positioning it in its parking arrangement, may compromise the robustness of the double floor in relation to high weight loads.

Furthermore, probably because of their greater ease of manufacture, these folding double floors tend to implement orthogonal teeth which, because they have this geometry, need the end of the tooth face that is in contact with the adjacent body to be rounded, so that their coupling/decoupling in the adjacent body's housing is efficient. That is to say that with the double floor in its working position, the plan view of the teeth is rectangular, the lateral ends forming a right angle with the hinge line and the furthest end of the hinge line being parallel to the hinge line across the full width of the teeth. Due to this geometry, its section according to a plane perpendicular to the working surface of the double floor is not rectangular, but its upper face, which will come into contact with the adjacent body long before reaching the end, curves progressively until it connects with the edge at the end of the lower face. There is no edge on the upper face. This curvature prevents friction in the coupling and uncoupling of the teeth within their housings, by cooperating in the rotation of the tooth. Since the teeth have an orthogonal plan, the entire upper face of the tooth contacts the housing surface simultaneously. This means that the already reduced contact surface of the teeth with the adjacent body in order to avoid breakage during the final handling is further reduced because it is rounded, and that the capacity of the teeth to transmit the static forces supported by the body adjacent to the body to which they belong is reduced for two reasons.

All of the above means that in order for the system to prevent sagging as much as possible, in practice the teeth need to follow one another continuously along the entire hinge line. That is to say that the teeth of each of the bodies alternate so that, as one progresses along the hinge line, where one tooth of one of the bodies ends, a tooth of the adjacent body begins, so that the entire hinge line is substantially toothed. Consequently, in order for the folding double floor as known in the current state of the art to be functional against sagging and to prevent tooth breakage, when the two main bodies are folded against each other, it is necessary that along the entire hinge line there are teeth protruding from the folded double floor.

It would therefore be advantageous to have a folding double floor of a vehicle load compartment which, by distributing and transferring the forces caused by the load evenly among the bodies that make up the double floor and preventing it from sagging along the connection lines, allows for efficient folding from its working position to its vertical parking arrangement, and that such folding is comfortable and does not pose a risk of breakage to those elements that comprise the double floor or risks of damage to the user who handles it.

### EXPLANATION OF THE INVENTION

This invention relates to a solution for the improvement of double floors used within a cargo compartment of a vehicle.

In a first aspect of the invention, a foldable double floor for a cargo compartment of a vehicle is disclosed. Folding double floors comprising a first body and a second body are known, wherein the first and second bodies each have two main surfaces substantially parallel therebetween. The first major surface is configured to support a load, while the second major surface is arranged opposite the first main surface. Thus, the distance between the two main surfaces defines the thickness of the respective first and second bodies.

Furthermore, the first and second bodies mentioned comprise a respective connection end being arranged opposite each other. Said connecting ends are connected by connecting means. Said connecting means are configured to articulate between said first and second bodies around an articulation axis defining a hinge line.

On the other hand, the folding double floor is configured to adopt at least one working position and one folding arrangement. The working position is that arrangement where the first major surface of the first body is arranged in substantially the same plane in relation to the first main surface of the second body. Alternatively, the folded position of the double floor may be defined as that arrangement wherein the first main surface of the first body is arranged opposite to, and substantially in contact with, the first main surface of the second body.

The hinge line may be defined by a concatenation of teeth and housings. That is to say that the first and second bodies of the double floor according to this invention comprise a set of teeth and housings arranged at their connecting end, forming the hinge line. Specifically, each tooth extends from its respective connecting end protruding in relation to the hinge line. When the foldable double floor adopts the working position, each tooth is configured to engage in a respective housing of the adjacent first or second body.

According to the solution of this invention, and in contrast to hitherto known solutions, the teeth and the housings are distributed alternately at the connecting end of the first and second bodies along the hinge line, defining a central section of said hinge line that is free of teeth and housings.

The arrangement of such teeth and housings manages to define a direction of rotation in order to move from a working position to a folding arrangement, making it impossible to turn in the opposite direction. Moreover, this arrangement provides a middle area that is free of teeth and housings, making it easier for the user to comfortably handle the double floor in its working position, for example, with only one hand. Otherwise, the double floor would have to be handled in its working position with both hands, or only by holding the double floor by one of the teeth, so that all of the weight is supported by a single first or second main body, which may damage the hinge line.

In a second aspect, the invention relates to a procedure for obtaining the folding double floor described above by means of a stamping process. For this purpose, firstly, a preform of the first and second bodies of the folding double floor is arranged in a stamping die. In the same stamping process, the teeth and housing are shaped, giving rise to a first body and a second body according to this invention. Therefore, such shaping is conducted in a single stamping process of each of the first and second body preforms. Finally, the first and second bodies formed in the previous stage are connected by connection means, giving rise to the folding double floor according to this invention.

Thus, this invention describes a folding double floor of a vehicle cargo compartment, as well as the method of obtaining said double floor that is capable of avoiding sagging at the connection line, as well as the durability thereof in the face of multiple folding and handling cycles, allowing an efficient folding in a comfortable and safe manner, without risks for the user of said double floor.

### Reference list

- 100.: Folding double floor
- 101.: Connecting means
- 102.: Articulation axis
- 103.: Hinge line
- 104.: Central section free of teeth and housings
- 110.: First body
111. First main surface of the first body
112. Second main surface of the first body
113. Connecting end of the first body
114. Tooth of the first body
115. Housing of the first body
116. Flat surface of the connecting end of the first body
117. Indentation of the first body
118. Working surface of the first body
- 120.: Second body
121. First main surface of the second body
122. Second main surface of the second body
123. Connecting end of the second body
124. Tooth of the second body
125. Housing of the second body
126. Flat surface of the connecting end of the second body
127. Indentation of the second body
128. Working surface of the second body
- 130.: Secondary body

### BRIEF DESCRIPTION OF THE FIGURES

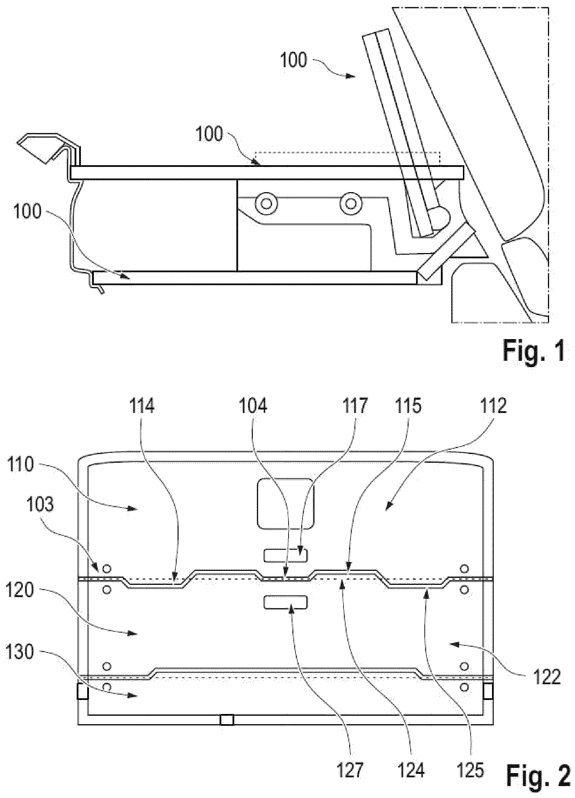

Figure 1 shows a cargo compartment of a vehicle, where a folding double floor according to the known state of the art is depicted, consisting of a first and second body and a secondary body, in four arrangements: two working positions (lower and upper) and two folding arrangements (horizontal and inclined).
Figure 2 shows a bottom view of a particular embodiment of the folding double floor according to this invention, formed by a first and second body and a secondary body in the working position, where a hinge line between the first and second bodies and the indentations present on the second main surface of the first and second bodies are visible.

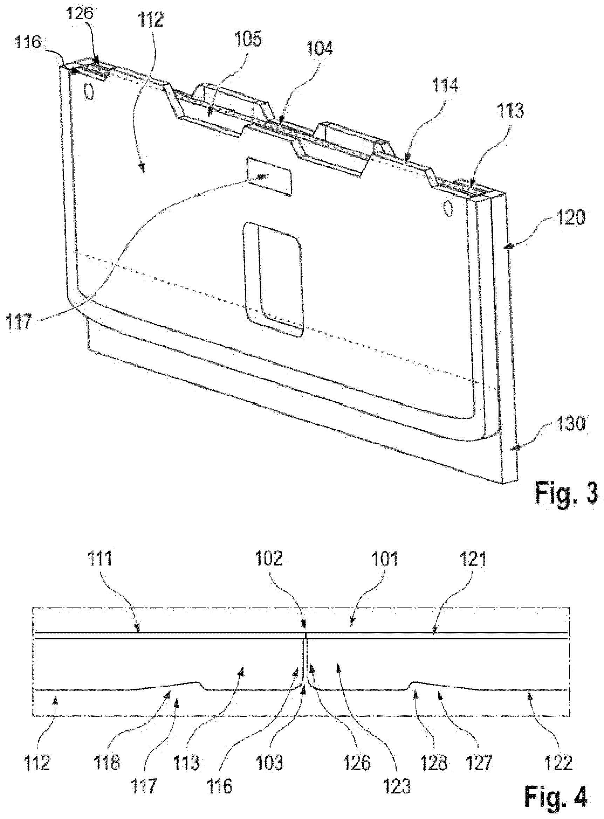

Figure 3 shows a perspective of a particular embodiment of the folding double floor according to this invention, in a folding arrangement, wherein the first surface of the first body is arranged opposite to and substantially in contact with the first main surface of the second body.
Figure 4 shows a schematic and sectional view of a particular embodiment of the folding double floor according to this invention, in a working position, wherein the first surface of the first body is arranged substantially in the same plane in relation to the first main surface of the second body, the connecting means of said first main surfaces being defined by a bonded textile piece.

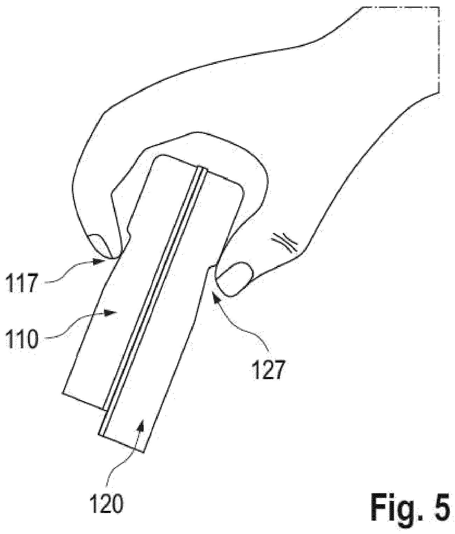

Figure 5 shows a schematic of the profile of a particular embodiment of the folding double floor according to this invention in a folding arrangement, in use, held by the hand of a user.

### DETAILED DESCRIPTION OF THE INVENTION

This invention relates to a solution for the improvement of double floors used within a cargo compartment of a vehicle.

In a first aspect of the invention, a folding double floor (100) for a cargo compartment of a vehicle is disclosed.

The folding double floor (100) according to this invention comprises a first body and a second body (110, 120).

Said first and second bodies (110, 120) each have two main surfaces substantially parallel therebetween. The first main surface (111, 121) is configured to support a load, while the second main surface (112, 122) is defined opposite the first main surface (111, 121). Thus, the distance between the two main surfaces (111, 112, 121, 122) defines the thickness of the respective first and second bodies (110, 120).

The first and second bodies (110, 120) further comprise a respective connection end (113, 123) being arranged facing therebetween. Said connecting ends (113, 123) are connected using connecting means (101).

Said connecting means (101) are configured to articulate therebetween said first and second bodies (110, 120) about an articulation axis (102) thereby defining a hinge line (103).

On the other hand, the folding double floor (100) is configured to adopt at least one working position and one folding arrangement. The working position is that arrangement where the first major surface (111) of the first body (110) is arranged in substantially the same plane in relation to the first main surface (121) of the second body (120). In contrast, the folding arrangement of the folding double floor (100) may be defined as that arrangement wherein the first main surface (111) of the first body (110) is arranged opposite to and substantially in contact with the first main surface (121) of the second body (120).

As shown in Figure 1, the user of a cargo compartment of a vehicle may require a different configuration depending upon the elements to be contained within said compartment. Therefore, the ability to adjust the folding double floor (100) is important. As depicted, this particular embodiment of the folding double floor (100) comprises a first and second body (110, 120) and, additionally, a secondary body (130), optional according to this invention.

In Figure 1, four arrangements may be distinguished: two working positions and two folding arrangements.

Among the working positions, a lower arrangement may be distinguished, wherein the double-floor is arranged above the floor of the vehicle cargo compartment. Alternatively, the folding double floor (100) may be arranged in an upper arrangement, supported on a support structure, arranged generally to the sides of the cargo compartment. The arrangement of one or the other is determined by the amount of space required by the user within the cargo compartment. In both the upper and lower arrangements, the first main body (110) and the second main body (120) are arranged in a same plane thereby forming a flat loading surface. In contrast, the secondary body (130) may, depending upon the space available in relation to the rear seat of the vehicle, vary its inclination in relation to the main bodies (110, 120). For example, in the lower arrangement, it is inclined, while in the upper arrangement, it is comprised in the same plane as the main bodies (110, 120).

On the other hand, the folded positions, where the folding double floor (100) reduces its length, are represented by a horizontal and inclined arrangement. In Figure 1, the horizontal folding arrangement may be obtained by means of the folding of a folding double floor (100) into an upper working position, represented by dashed lines. A folding double floor (100) arranged in this arrangement allows partial access to the lower floor of the vehicle cargo compartment. For this reason, the folding double floor (100) may additionally be moved to a tilted folding arrangement wherein the user has full access, for example, to the floor of the cargo compartment.

A hinge line (103) is defined when the folding double floor (100) is folded. Said hinge line (103), formed by an articulation axis (102), may be defined by a concatenation of teeth (114,124) and housings (115, 125). That is to say that the first and second bodies (110, 120) of the folding double floor (100) according to this invention comprise a set of teeth (114, 124) and housings (115, 125) arranged at their connection end (113, 123), forming a hinge line (103). The teeth (114, 124) and housings (115, 125) of the same first or second body (110 or 120) alternate with each another. Likewise, a tooth (114, 124) of one of the bodies, first or second body (110 or 120), is opposite to a housing (115, 125) of the other first or second body (110 or 120) adjacent, and vice versa, a housing (115, 125) of one of the bodies, first or second body (110 or 120), is opposite to a tooth (114, 124) of the other adjacent first or second body (110 or 120). This arrangement of teeth (114, 124) and housings (115, 125) may be seen in detail in Figure 3.

Specifically, each tooth (114,124) extends from its respective connecting end (113, 123), protruding in relation to hinge line (103). When the folding double floor (100) adopts the working position, each tooth (114,124) is configured to couple with a respective housing (115,125) of the adjacent first or second body (110, 120),

As indicated above, the specific arrangement of these teeth (114, 124) and respective housings (115, 125) makes it possible to define a direction of rotation from a working position to a folding arrangement, preventing rotation in the opposite direction.

In contrast to hitherto known solutions, the teeth (114, 124) and the housings (115, 125) are distributed alternately at the connection end (113, 123) of the first and second bodies (110, 120), along the hinge line (103), defining a central section (104) along said hinge line free of teeth (114, 124) and housings (115, 125), i.e., the connecting end (113, 123) of each first or second body (110, 120) is arranged to coincide with the hinge line (103).

Figure 2 shows a bottom view of a particular embodiment of the double folding floor (100) according to this invention, in the working position. Again, this particular embodiment consists of a first and second body (110, 120) and a secondary body (130). In such a particular embodiment, a central area and lateral ends of the first and second bodies (110, 120) and housings (115, 125) are observed to be free of teeth (114, 124), i.e. the hinge line (103) coincides with the connection ends (113, 123) of each first or second body (110, 120). On either side of said central section (104) there are alternating housings (115, 125) and teeth (114, 124).

In Figure 2, a hinge line (103) between the first and second bodies (110, 120) and the indentations (117, 127) present on the second main surface (112, 122) of the first and second bodies (110, 120) can be seen.

For further detail of this particular embodiment, Figure 3 shows a perspective of the double folding floor (100) in a folding arrangement. The first surface (111) of the first body (110) is arranged opposite to and substantially in contact with the first major surface (121) of the second body (120).

Furthermore, in Figure 3, the hinge line (103) formed between the first and second bodies (110, 120) may be seen at the top of the figure. In this respect, in a particular embodiment of the double folding floor (100), the connecting end (113, 123) of the first and second bodies (110, 120) each comprises a substantially flat surface (116, 126). Said substantially flat surface (116, 126) is a surface that connects the respective first main surface (111, 121) with the respective second main surface (112, 122), of each body of the double folding floor (100). Thus, when the folding double floor (100) is in the folding arrangement, both substantially planar surfaces (116, 126) of the first and second bodies (110, 120) are arranged in substantially the same plane. In this way, a user may grasp both bodies, the first and second bodies (110, 120), with one hand and be able to comfortably perform the compression of both bodies in order to keep them in the folding arrangement while handling the folding double floor (100).

In another particular embodiment of the solution, the central section (104) of the hinge line (103) is in the range 5-25 cm, i.e., the extension of said central section (104) is at least 5 cm and not more than 25 cm.

In another particular embodiment of the solution, the first and second bodies (110, 120) comprise an indentation (117, 127). The indentation (117, 127) is arranged on a respective second main surface (112, 122), configured to be reached simultaneously with the fingertips of a user in the folding arrangement.

Said indentations (117, 127) may extend, in a direction substantially parallel to the hinge line (103). Specifically, they may extend over a dimension that is substantially equal to the extent of the central section (104) of said hinge line (103). Thus, the longitudinal ends of said indentations (117, 127) may substantially coincide with the longitudinal ends of said central section (104).

Additionally, the indentations (117, 127) of the first and second bodies (110, 120) are arranged at an equal distance from the hinge line (103).

Figure 4 shows a diagram of the profile of a particular embodiment of the double folding floor (100), in a working position, wherein the first main surface (111) of the first body (110) is arranged in substantially the same plane in relation to the first main surface (121) of the second body (120), the connecting means (103) of said first main surfaces (111, 121) being defined by a adhered piece of textile material.

In Figure 4, it may be seen how the indentations (117, 127) comprise a respective working surface (118, 128) arranged in a recessed manner in relation to the respective second main surface (112, 122). The difference in level of the indentation (117, 127) is less than the thickness of the respective first or second body (110, 120).

In particular, two surfaces may be differentiated on each working surface (118, 128) of the indentation (117, 127). Thus, the following may be defined:
- a compression surface configured so that a user can exert a compression force on it towards the opposite compression surface, such that the first and second bodies (110, 120) are held in the folding arrangement, and
- a traction surface configured so that a user can simultaneously exert a force on both traction surfaces of the first and second body (110, 120) to move the double folding floor (100) in the folding arrangement.

Regardless of the embodiment of the double folding floor, the difference in height of the working surface (118, 128) of the indentation (117, 127) in relation to the respective second main surface (112, 122) may be substantially constant at any point on said working surface (118, 128). Alternatively, the difference in height of the working surface (118, 128) of the indentation (117, 127) in relation to the respective second main surface (112, 122) is greater in an area of the indentation (117, 127) closer to the connecting end (113, 123) of the respective first or second body (110, 120). Said difference in height decreases as the distance from said connecting end (113, 123) of the respective first or second body (110, 120) increases. Furthermore, the difference in height of the working surface (118, 128) in relation to the respective second main surface (112, 122) may be substantially constant at any point on an axis parallel to the hinge line (103).

As shown in the previous figures, the double folding floor (100) may comprise a secondary body (130). Said secondary body (130) may be connected to the first or second body (110, 120), defining a second hinge line. On this occasion, the second hinge line, existing in relation to the secondary body, may comprise a set of teeth and housings, in a similar and equivalent manner to that described in relation to the hinge line (103) defined between the first and second bodies (110, 120). Specifically, said set of teeth and housings may extend along the entire length of the second hinge line.

In Figure 4, an example of the connecting means (101) that may be employed according to this invention are shown, in this particular embodiment, the connecting means (101) comprise a piece of textile material adhered to the first and second bodies (110, 120).

In an even more particular embodiment, the flexible piece of textile material covers the first main surface (111) of the first body (110) and the first main surface (121) of the second body (120). In this way, said piece of textile material serves as a connection during the movement of said double folding floor (100) between the working position and the folding arrangement, preventing the first body (110) from being separated from the second body (120).

Furthermore, said piece of textile material is integrally adhered to the entire surface of the first main surface (111) of the first body (110) and the first main surface (121) of the second body (120) that comprise the double folding floor (100).

In a second aspect of the invention, a process for obtaining a double folding floor (100) is described. First, a preform of the first and second bodies (110, 120) of the folding double floor (100) is provided in a stamping die. A preform is understood as a part that may be transformed or deformed into a product, in this case, the first or second body (110, 120).

Furthermore, the teeth (114, 124) and housings (115, 125) are formed in a process of stamping the blank of the first and second bodies (110, 120), giving rise to a first and second body (110, 120), said first and second bodies (110, 120) being formed in a single stamping process.

Finally, once the first and second bodies (110, 120) have been formed, both bodies are connected by connection means (101), obtaining a double folding floor (100).

By way of example, a process for obtaining the preform of the first and second bodies (110, 120) is quoted. Thus, the double folding floor (100) comprises a laminar structure formed from a central core of paper pulp or a cellulose structure in the form of a honeycomb, two layers adjacent to the core, one on each side of the core, formed from fiberglass, and two end layers, each covering the corresponding layer adjacent to the core, said end layers being formed from polyurethane (PUR) or polypropylene (PP). Said structure is arranged on the stamping press, which compresses and cuts the perimeter edges of the volume such as to obtain said first and second bodies (110, 120).

The carpet-like flexible textile coating or covering is usually arranged above the upper end layer (of polyurethane or polypropylene).

Optionally, an additional layer of fishline may be arranged on top of the bottom end layer.

The double folding floor (100) may be manufactured using a method comprising shaping the load floor (1) by means of stamping or pressing. According to a first embodiment of the manufacturing method, the textile coating layer or carpet is formed and bonded to the double folding floor (100) at the same time that the stamping matrix or matrices shape the double folding floor (100), the textile coating layer thus being inside the manufacturing method mold. According to a second embodiment of the manufacturing method, the textile coating layer is adhered to the double folding floor (100) after the double folding floor (100) has been formed by means of the stamping die or dies.

In a particular embodiment of this process, the indentation (117, 127) is also formed during said single stamping process of each of the bodies, first or second body (110, 120). In this way, the number of steps required in order to obtain a double folding floor (100) according to this invention is reduced.

Regardless of the forming process selected for the generation of the indentation (117, 127), the connection of the first and second bodies (110, 120) can be made by adhering the textile piece. Specifically, the adhesion of the piece of textile material is conducted in such a way that said piece of textile material serves as a connection when the folding double floor (100) moves between the working position and the folding arrangement. In one particular embodiment of the process, in order to reduce the number of steps, the adhesion of the piece of textile material is conducted together with the shaping of the teeth (114, 124) and housings (115, 125).

The result obtained according to this invention is a double folding floor (100) of a cargo compartment of a vehicle that is capable of avoiding sagging along the connecting line, allowing for efficient, comfortable and safe folding without risk to the user of said double folding floor (100).

As depicted in Figure 5, the double folding floor (100) may be held, in a folding arrangement, by a user's hand due to the existence of a central section (104) that is free of teeth (114, 124) and housings (115, 125). In such an arrangement, the safest and most appropriate way would be for the user to hold the double folding floor (100) by the edge that has been left uncovered by the hinge line (103). That is to say that by placing one hand close to the edge of the double folding floor (100) and clamping it by pressing the second main surface (122) of the second main body (120) with the thumb and holding the second main surface (112) of the first main body (110) with the rest of the fingers. In this way, a compressive force is exerted between the two bodies, the first and second bodies (110, 120), which allows them to be held comfortably in the folding arrangement during handling of the double folding floor (100). It would also be possible to position the fingers in the opposite way, although the position of the wrist would make the final rotation difficult. In either mode, the edge of the double folding floor (100) would be inserted between the thumb and remaining fingers to make a clamp.

Thus, as shown in Figure 5, the user may perform a clamp-like maneuver such that the thumb may exert pressure upon the working surface (118, 128) of one of the indentations (117, 127) and the remaining fingers may exert pressure upon the working surface (118, 128) of the other indentation (117, 127).

In this way, the two indentations (117, 127) serve as a handle for:
- exerting a rotation of the double folding floor (100) about an articulation axis (102) arranged at the end of the flat surface (116, 126) of the double folding floor (100) opposite to the one being clamped,
- raising the double folding floor (100) in relation to its position in a working position or in relation to the bottom of the compartment, and
- displacing the double folding floor (100) towards or away from the previous wall.

In any of these manipulations of the double folding floor (100), the user holds the double folding floor (100) by the edge, thereby exerting a clamp-like force upon the two main bodies (110, 120) that allows them to remain folded during handling.

## Claims

1. Double folding floor (100) for a cargo compartment of a vehicle, wherein the double folding floor comprises a first body (110) and a second body (120), wherein said first and second bodies (110, 120) each have two main surfaces substantially parallel therebetween, the first main surface (111, 121) being configured to support a load, and the second main surface (112, 122) being arranged opposite to the first main surface (111, 121), wherein the distance between the two main surfaces (111, 112, 121, 122) defines the thickness of the respective first and second bodies (110, 120), wherein the first and second bodies (110, 120) comprise a respective connection end (113, 123), each connecting end (113, 123) being arranged opposite to the other, and said connecting ends (113, 123) being connected by connecting means (101) configured to articulate therebetween said first and second bodies (110, 120) about an axis of articulation (102) defining a hinge line (103), wherein the double folding floor (100) is configured to adopt at least one working position, wherein the first main surface (111) of the first body (110) is arranged in substantially the same plane with respect to the first major surface (121) of the second body (120), and at least one folded position, wherein the first major surface (111) of the first body (110) is arranged opposite to and substantially in contact with the first major surface (121) of the second body (120), wherein the first and second bodies (110, 120) comprise a set of teeth (114, 124) and housings (115, 125) arranged at their connection end (113, 123), wherein each teeth (114, 124) extends from its respective connection end (113, 123) protruding in relation to the hinge line (103), such that, when the double folding floor (100) adopts the working position, each tooth (114, 124) is configured to couple with a respective housing (115, 125) of the adjacent first or second body (110, 120),
**characterized in that** the teeth (114, 124) and the housings (115, 125) are distributed alternately on the connection end (113, 123) of the first and second bodies (110, 120), along the hinge line (103), defining a central section (104) of said hinge line (103) that is free of teeth (114, 124) and housings (115, 125).

2. Double folding floor (100), according to claim 1, wherein the connecting end (113, 123) of the first and second bodies (110, 120) each comprise a substantially flat surface (116, 126) connecting the respective first main surface (111, 121) to the respective second main surface (112, 122), such that, when the double folding floor (100) is in the folding arrangement, both flat surfaces (116, 126) of the first and second bodies (110, 120) are arranged in substantially same plane.

3. Double folding floor (100), according to any one of the claims from 1 to 2, wherein the extension of the central section (104) of the hinge line (103) is at least 5 cm and not more than 25 cm.

4. Double folding floor (100), according to any one of the claims from 1 to 3, wherein the first and second bodies (110, 120) comprise a indentation (117, 127) in their respective second main surface (112, 122), said indentations (117, 127) being configured to be reached simultaneously with the fingertips of a user in the folding arrangement.

5. Double folding floor (100), according to claim 4, wherein said indentations (117, 127) extend, in a direction substantially parallel to the hinge line (103), for a dimension substantially equal to the extent of the central section (104) of said hinge line (103).

6. Double folding floor (100) according to any of the claims from 4 to 5, wherein the indentations (117, 127) of the first and second bodies (110, 120) are arranged at the same distance from the hinge line (103).

7. Double folding floor (100), according to any of the claims from 4 to 6, wherein said indentations (117, 127) comprise a respective working surface (118, 128) arranged in a recessed manner in relation to the respective second main surface (112, 122), with a difference in level less than the thickness of the respective first or second body (110, 120).

8. Double folding floor (100), according to claim 7, wherein each working surface (118, 128) of the indentation (117, 127) defines:
- a compression surface configured so that a user can exert a compression force on it towards the opposite compression surface, such that the first and second bodies (110, 120) are held in the folding arrangement, and
- a traction surface configured so that a user can simultaneously exert a force on both traction surfaces of the first and second body (110, 120) to move the double folding floor (100) in the folding arrangement.

9. Double folding floor (100), according to claims from 7 or 8, wherein the difference in level of the working surface (118, 128) in relation to the respective second main surface (112, 122) is substantially constant at any point on said working surface (118, 128).

10. Double folding floor (100), according to claims 7 or 8, wherein the difference in level of said working surface (118, 128) in relation to the respective second main surface (112, 122) is greatest within an area of the indentation (117, 127) closest to the connecting end (113, 123) of the respective first or second body (110, 120), and said difference in level decreases as the distance from said connecting end (113, 123) of the respective first or second body (110, 120).

11. Double folding floor (100), according to any one of the claims from 1 to 10, wherein the connecting means (101) comprise a piece of textile material adhered to the first and second bodies (110, 120).

12. Double folding floor (100) according to claim 11, wherein the flexible piece of textile material covers the first main surface (111) of the first body (110) and the first main surface (121) of the second body (120), such that said piece of textile material serves as a connection during the movement of said double folding floor (100) between the working position and the folding arrangement.

13. Double folding floor (100) according to claim 12, wherein said piece of textile material is integrally adhered to the entire surface of the first main surface (111) of the first body (110) and the first main surface (121) of the second body (120) comprising the double folding floor (100).

14. Procedure for obtaining a double floor according to any one of the claims from 1 to 13, wherein the process comprises the following steps:
- arranging a preform of the first and second bodies (110, 120) of the double folding floor (100) in a stamping die,
- forming the teeth (114, 124) and housings (115, 125) in a stamping process of the preform of the first and second bodies (110,120) resulting in a first and second body (110, 120), and
- connecting the first and second bodies (110, 120) formed by means of connection means (101), obtaining a double folding floor (100).

15. The process for obtaining a double floor according to claim 14, wherein the indentations (117, 127) are also formed during said single stamping process.
